# EUROPEAN PATENT SPECIFICATION

(11) **EP 0 861 381 B1**
(45) Date of publication and mention of the grant of the patent: **06.09.2000**
(21) Application number: 96937953.6
(22) Date of filing: 20.11.1996
(51) Int. Cl.: F16B 47/00

(54) **RELEASABLE MOUNTING DEVICE**
LÖSBARE MONTAGEVORRICHTUNG
ACCESSOIRE DE FIXATION AMOVIBLE

(30) Priority: 20.11.1995 US 10339 P; 24.11.1995 US 6285 P; 14.06.1996 US 663811
(43) Date of publication of application: 02.09.1998
(73) Proprietor: Hiscock, Anthony S., Kelowna, British Columbia V1Y 9H2 (CA); Hiscock, Harold F., Kelowna, British Columbia V1Y 9H2 (CA)
(72) Inventor: Hiscock, Anthony S., Kelowna, British Columbia V1Y 9H2 (CA); Hiscock, Harold F., Kelowna, British Columbia V1Y 9H2 (CA)
(74) Representative: Ryan, Anne Mary
(86) International application number: CA9600757
(87) International publication number: WO9719272

(56) References cited:
- DE-A- 2 723 616
- PATENT ABSTRACTS OF JAPAN vol. 015, no. 146 (M-1102), 12 April 1991 & JP 03 024311 A (YOKOHAMA RUBBER CO LTD:THE;OTHERS: 01), 1 February 1991,

## Description

### Field of the Invention

This invention relates to an improvement to devices used for the temporary mounting of objects on smooth surfaces such as glass or tile by way of a vacuum; typically called a suction cup, and in particular suction cups for mounting on surfaces having surface asperity, texturing or minor irregularities.

### Background of the Invention

Suction cups are often used to mount objects to glass, tile or similar smooth surfaces. The performance of the suction cup depends greatly on how smooth the surface is. That is to say, that if the surface had a minor irregularity, roughness, surface asperity or was uniformly textured, the suction cup would fail to adhere for any length of time.

Applicants are aware of United States Patent No. 5,423,716 which issued June 13, 1995 to Strasbaugh for a Wafer-handling Apparatus having a resilient membrane which holds the wafer when a vacuum is applied. The apparatus is for acquiring, holding and releasing a wafer and includes a soft resilient membrane that covers a horizontal backing plate wherein the lower surface of the backing plate includes a number of recessed areas to which a vacuum can be selectively applied. To pick up a wafer, the membrane is brought into contact with the wafer and a vacuum applied to the recessed areas so as to suck the resilient membrane into the recessed areas so as to form each recessed area into a suction cup drawing the wafer against the membrane. What is neither taught nor suggested is using a resilient gasket in conjunction with conventional suction cups to which a vacuum cannot be externally applied but which, rather, rely on the resilient structure of the suction cup to lift a center zone of the cup away from a surface to which the suction cup is adhered to thereby form a vacuum in the void formed between the central zone and the surface.

Applicant is also aware of United States Patent No. 4,356,959, which issued to Ireland on November 2, 1982 for an invention entitled Resilient Suction Cup with Soft Pliable Sealing Gasket. Ireland discloses a suction cup of resilient rubber-like material having affixed on the peripheral portion of its suction side a ring gasket of soft pliable putty-like material, and specifically the use of gasket of polyvinyl isobutyl, adapted to form a vacuum tight spaco under the suction side of the suction cup so that when pressed against a non-porous supporting surface that a vacuum adhesion is maintained despite imperfections or irregularities in the surface. Ireland teaches that the ring gasket may be of a soft pliable non-resilient putty-like material and may also be described as being clay-like or caulk-like non-hardening compound which adheres slightly to smooth surfaces. Ireland also describes the non-resilient gasket material as being likened to slightly warm beeswax or to a stiff paste. Ireland, however, did not realize that a resilient material could effectively form an airtight gasket stating that with respect to the suction cup that by reason of the resilient nature of such suction cup the periphery thereof was not able to establish a vacuum-tight seal over imperfections or irregularities in the surface to which it was applied and hence that such suction cups fall off from time to time. Consequently Ireland did not realize, and it is an object of the present invention to provide, a suction cup gasket which is resilient rather than putty-like so that the gaskets of the present invention may be applied and reused without inelastic deformation of the gasket structure such as occurs in the use of gaskets according to the Ireland teaching.

Applicant is aware of German patent disclosure document 2723616 filed by Mokry for a Suction Holding Device. Mokry teaches the use of a suction cup having a scaling gasket which consists of a very soft material, for example, of a synthetic material of rubber, of a hardness of about 30 shores so as to provide a suction-holding device of faultless adhesion on a not absolutely even base plate, for example, on a dashboard of a motor vehicle, on a cracked paving stone or the like. Various structures are disclosed to increase the efficacy of the scaling gasket, for example, forming the sealing gasket as a flat ring having on its underside concentric scaling ribs protruding downwardly of the gasket. What is neither taught nor suggested, and which it is an object of the present invention to provide, is the use of a resilient gasket where the material of the resilient gasket is characterized by a tackiness, without such tackiness leaving other than a minimal olly residue when the resilient gasket is adhered to, and removed from, a surface, such as a painted surface.

### Summary of the Invention

The device of the present invention is a suction cup made of PVC or similar type of material that has adhered to its entire sealing surface a very resilient material layer. The purpose of this material layer is to provide a vacuum seal despite irregularities, surface asperity, or rexturing of the surface.

The present invention is a releasable mounting device which includes a resilient layer or gasket having a durometer rating of less than or equal to 30, shore A, and a suction cup cooperating with the resilient layer for inducing a negative air pressure or suction between the resilient layer and a rough, or at least non-smooth, surface when the resilient layer and suction cup means are flattened against the rough surface, so that the resilient layer is between the suction cup and the rough surface, and released so as to remain releasably attached to the rough surface by reason of the negative air pressure or suction between the resilient layer and the rough surface. The suction cup may be a couventional suction cup and the resilient layer may be releasably secured by chemical bonding or otherwise to the lower surface, ie. the concave contact surface, of the suction cup. The suction cup alternatively may be any form of endo-frame or exo-frame secured or securable to the resilient layer so long as the endo-frame or exo-frame (of which the conventional suction cup is an example) pulls the center portion or zone of the resilient layer (as opposed to its periphery) away from the rough surface so that the tendency of the center portion is to lift itself off the rough surface thereby inducing the negative air pressure or suction in the void or vacuum thereby formed between the center portion and the rough surface, the periphery of the resilient layer forming an air-impervious bond to the rough surface by reason of its soft resiliency. The resilient gasket may be made of hydrated cross-linked silicone polymer.

In one aspect, the present invention is a releasable mounting device for adhering a suction cup to a rough, or at least non-smooth, surface to which it is desired to releasably mount the suction cup, wherein the device includes a resilient gasket having a durometer rating of less than or equal to 20 shore A, for mounting between the suction cup and the surface.

In a further aspect, the present invention is a releasable mounting device for adhering a suction cup to a rough surface to which it is desired to releasably mount the suction cup, wherein the device includes having a resilient gasket with a diameter rating of less than or equal to 10 shore A for mounting between the suction cup and the surface.

### Brief Description of the Drawings

Figure 1 is, in plan view, of one embodiment of the releasable mounting device of the present invention.

Figure 2 is a side elevation view of the device of Figure 1.

Figure 3 is a perspective view of the resilient gasket in a preferred embodiment.

Figure 4 is, in plan view, a suction cup in the preferred embodiment.

Figure 5 is, in bottom view, the suction cup of Figure 4.

Figure 5a is a diagrammatic view of the releasable mounting device of a preferred embodiment mounted to a surface.

Figure 6 is a cross sectional view along line 6 - 6 in Figure 5.

Figure 7 is the view of Figure 6 showing a resilient gasket mounted in one embodiment.

Figure 8 is, in perspective view, the releasable mounting device in a further embodiment.

Figure 9 is the releasable mounting device of Figure 8 in a front view.

Figure 10 is, in side elevation view, a further embodiment of the releasable mounting device of the present invention.

Figure 11 is, in front elevation view, the releasable mounting device of Figure 10.

Figure 12 is, in perspective view, a further embodiment of the releasable mounting device.

Figure 13 is, in side elevation view, a further embodiment of the releasable mounting device.

### Detailed Description

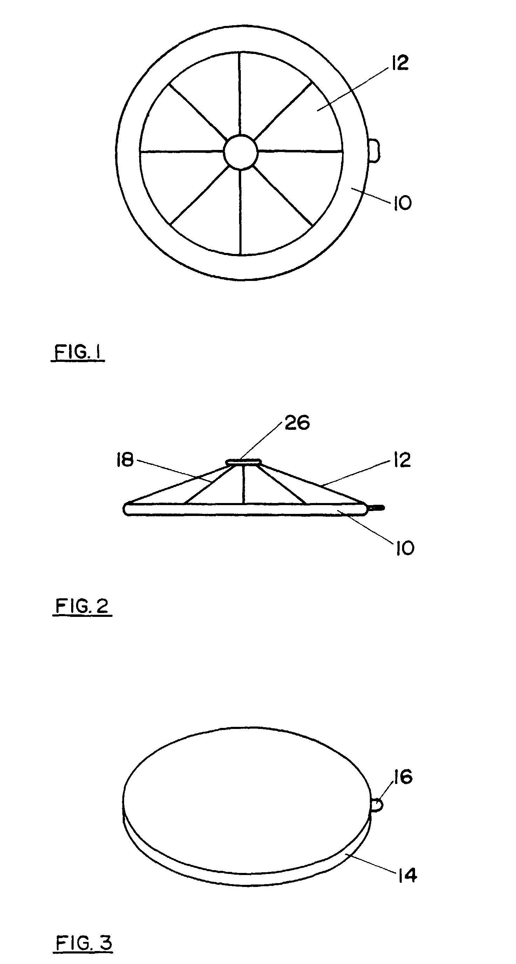

Having devised a device for mounting posters to windows without damaging the poster, applicants recognized it would be advantageous if the device could be applied to other surfaces such as walls. Thus applicants adapted the conventional suction cups used on the poster mounting device by inclusion of a resilient gasket laid across the contact surface of suction cup and glued to the outer edge of the suction cup. Resilient material was located in the form of a child's toy called "Sticky Hands". A wooden mould was formed of the desired shape. The resilient material was melted down and poured into the mould to form a "doughnut" shaped resilient gasket as show in Figures 1 and 2 mounted to suction cup 12. The gasket was bonded to the suction cup itself by using a cyanonacrylate adhesive (3M brand CA 40). It was found that the "Sticky Hands" gasket left an oily residue on any surface painted with a flat paint when the gasket was used to apply the suction cup to the surface. The "Sticky Hands" gasket also had substantial lateral and torsional deflection which resulted in the cup losing its vacuum seal if too much lateral pressure was applied to the suction cup. Another problem was actually releasing the suction cup without tearing the gasket from the suction cup. This obstacle was overcome by drilling a hole in the top of the suction cup and inserting a nail head that acted as a plug while the device was mounted to the wall. Removing the nail head from the suction cup, consequently, broke the vacuum seal and the cup would release from the wall.

Applicant's search for a better resilient gasket material fed to a cross-linked hydrated silicone polymer having a selectively adjustable tackiness. This turned out to be a remarkable material for many reasons, including:
a) The resilient material was already in sheet form, which allowed bonding the silicone material to the entire contact surface of the suction cup.
b) The resilient material left minimal oily residue on the surfaces painted with flat paint. What residue did remain was easily removed by wiping with a damp cloth.
c) The material itself had a natural and selectively adjustable "tackiness» to it that stuck to PVC suction cups quit readily without glue or other adhesives, and to porous or uneven surfaces. Advantageously an increased tackiness allowed for better adherence of the gasket to the suction cup.
d) The material bonded better to PVC suction cups than the "Sticky Hands" material when using the cyanoacrylate adhesive.
This sheet form resilient gasket became the resilient material in the preferred embodiment illustrated in Figure 3 as resilient gasket 14, although any tacky non-porous resilient material of a 30, Shore A, durometer rating or preferably less for surfaces which are porous, for example, other than glass, which material would leave a minimal oily residue, could be used if it could be bonded to, or moulded around the suction cup to form a resilient layer or film.

The advantage of applicant's suction cup design is that with the use of the resilient gasket the suction cup will adhere to most surfaces. It is only required that the surface be without any extreme surface irregularity. Because the resilient material is adhered to the entire contact surface of the suction cup, other advantages become apparent:
a) It makes a better seal due to the increased sealing area and the ability of the resilient material to conform to surface asperity, texturing or minor irregularities of the surface.
b) It makes the cup resistant to any lateral deflection.
c) It makes the cup resistant to torsional deflection, i.e. rotation about the axis of symmetry.
d) It provides for better vacuum adherence because more air is expelled from between the surface of the resilient material and the contact surface as opposed to a "doughout" shaped gasket.
e) The vacuum seal may not fail in the event of an extreme temperature change which may otherwise cause the structural material of the suction cup to become too rigid to maintain a vacuum seal on its own. This is because the resilient material remains resilient at low temperatures (for example -35°c).
f) Being in sheet form allowed readily the forming, as by cutting, of a removal tab 16 which when lifted from a surface to which the suction cup 12 and gasket 14 is adhered, allows for peeling back of the gasket to break the pneumatic seal without damaging the gasket, and thus facilitating easy removed of the suction cup from any surface.

In one embodiment the entire surface of the resilient material gasket was adhered to the contact surface of the suction cup. The concave suction cup itself became the structural member forming the resilient gasket into a concave shape, to provide the suction cup-like circumferential sealing surface and inner vacuum cavity between the gasket and the porous surface against which the suction cup is pressed. Another method for forming the resilient material into a suction cup shape would be to mould the material around a wire frame infra-structure or the like shaped like a suction cup.

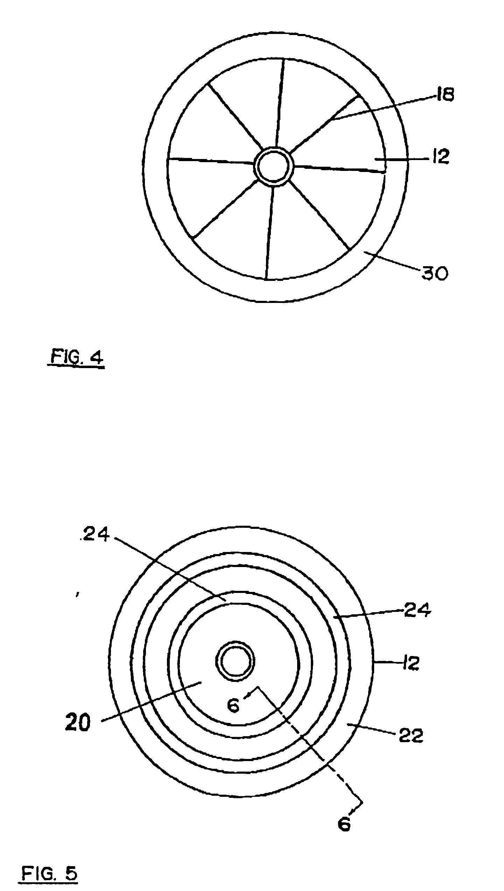

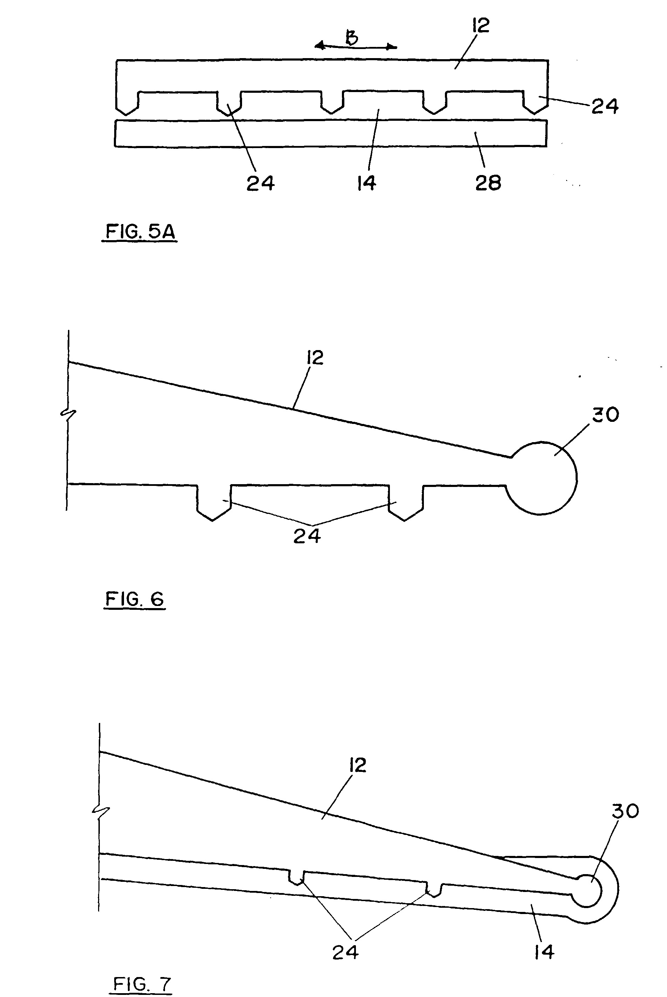

In the preferred embodiment suction cup 12 has on its upper surface radially extending raised ribs 18 as illustrated in Figure 4. Raised ribs 18 assist resilient suction cups to distribute the pneumatic vacuum force in the central zone 20 under the suction cup (see Figure 5) more evenly from the center zone to the periphery 22 of suction cup 12. Reinforcing concentric raised rings 24 may also be provided or formed on the undersurface of suction cup 12 to reduce lateral deflection of a resilient suction cup 12, in particular when the suction cup is mounted to a vertical wall and a downward load applied to load attachment point 26. As diagrammatically illustrated in Figure 5a and in cross section in Figure 6, when suction cup 12 is flattened, ie. when applied to a flat surface 28, raised rings 24 are embedded in resilient gasket 14 to assist in resisting movement in direction B, whereby heavy loads applied to suction cup 12 may otherwise cause creasing of the gasket 14 material (and thereby loss of the air seal) due to the shearing stress between the suction cup and wall 38 or surface 28 acting on gasket 14.

As illustrated in Figure 7, resilient gasket 14 may be formed on the underside of suction cup 12 so as to wrap-around annular rim 30 to thereby assist mounting gasket 14 to suction cup 12.

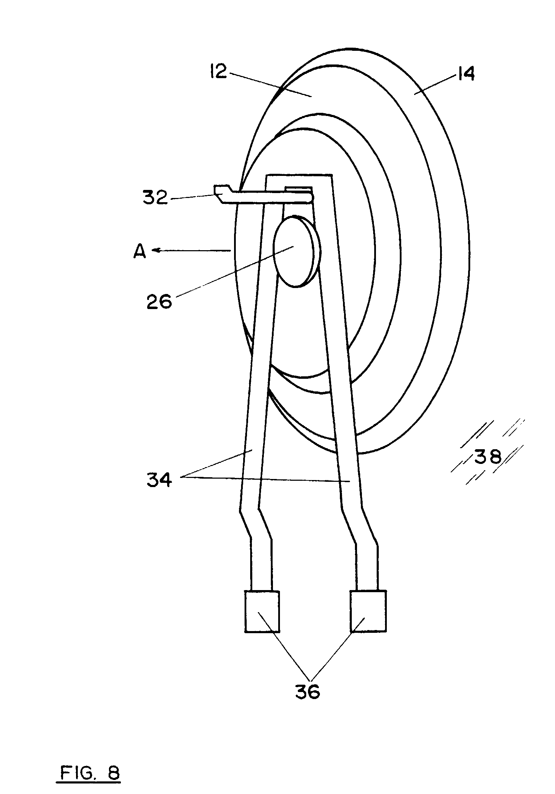

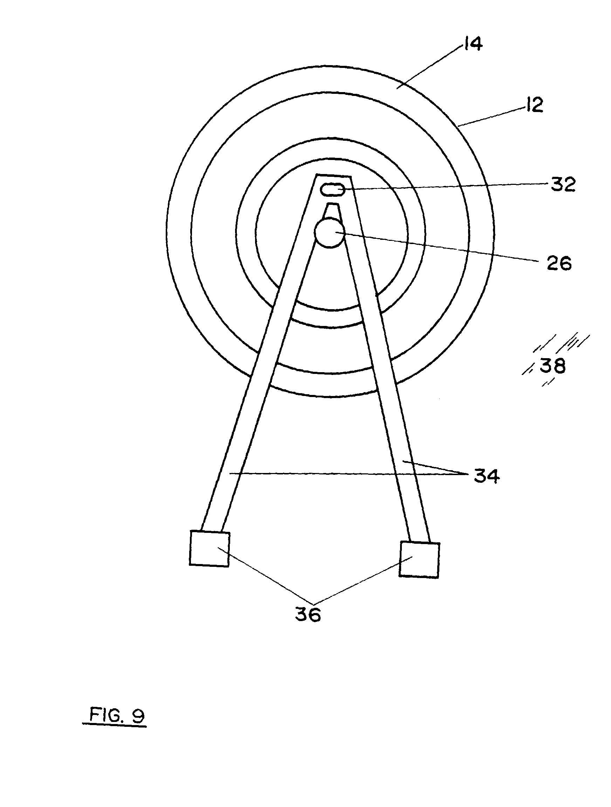

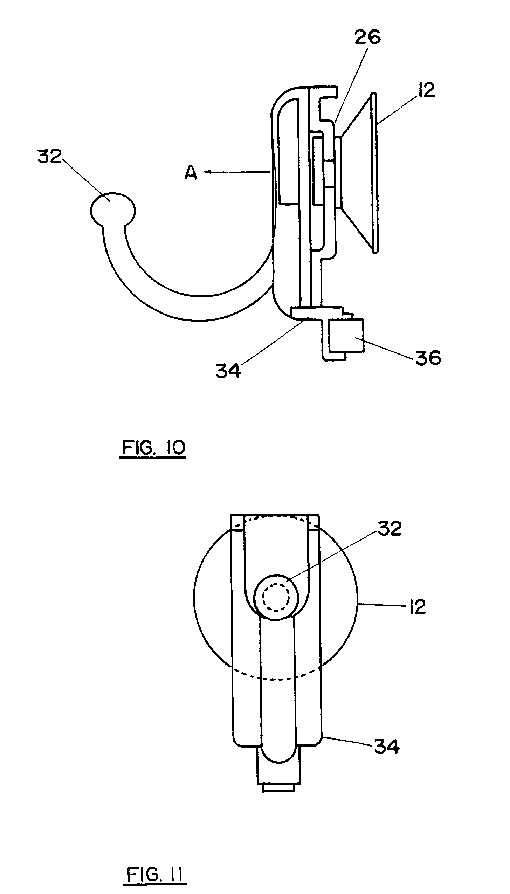

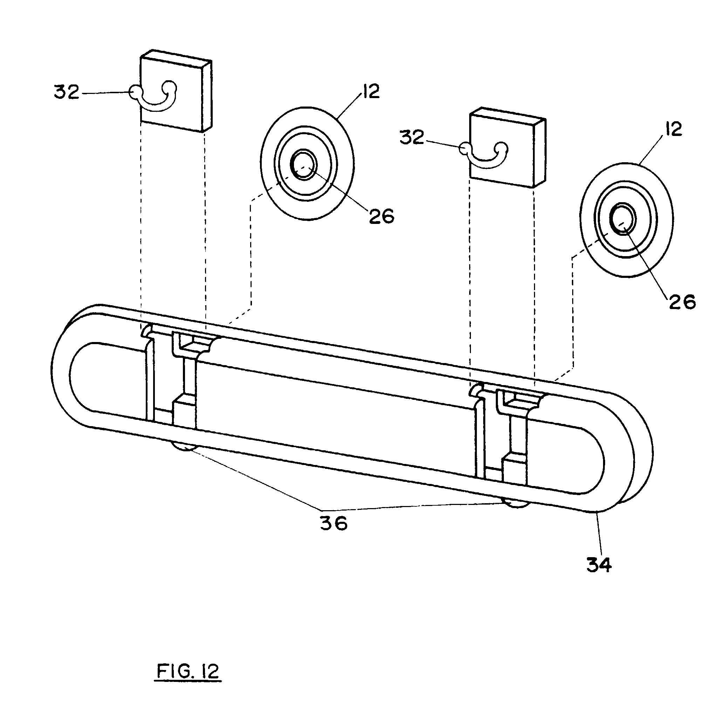

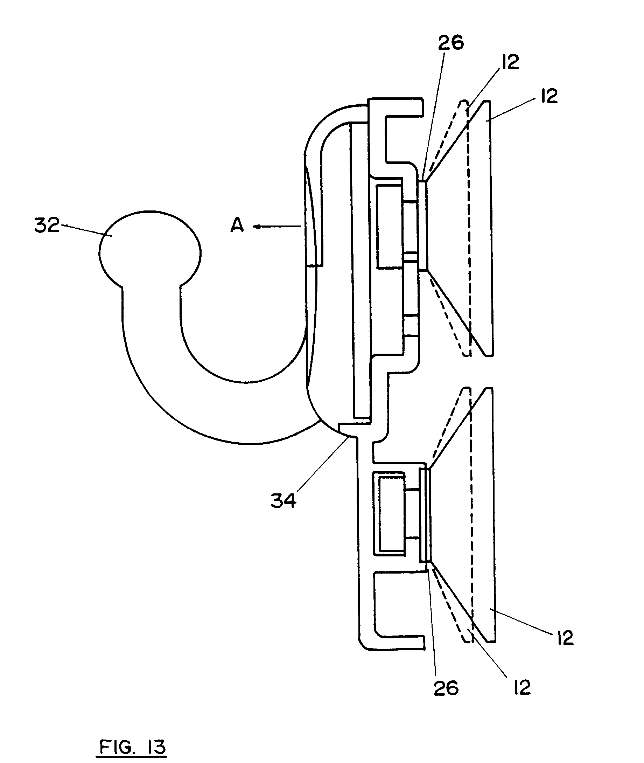

As shown in Figures 8 - 13, a wall mount hook 32 may be provided for use with the suction cup of the present invention. The hook is designed to re-direct the downward force of an object hanging from the suction cup to a force that pulls outward on suction cup 12 in direction A. In particular, weight hung from the hook 32 causes the weight transfer member 34 to pivot about the rubber pads 36 which are in frictional engagement with the wall 38, or as shown in Figure 13 to pivot about lower suction cups 40. The wall mount hook may be mounted vertically down onto the suction cup at load attachment point 26. In a further aspect, mechanical pivoting means might be employed to convert a downward force into a force having a horizontal component in direction A.

Although illustrated as round or disc-shaped, of course the resilient gasket 14 could be formed in any two dimensional shape as required to conform to the shape of the underside of suction cup 12.

For applications where the suction cup 12 is exposed to sunlight, advantageously an ultra violet stabilizer in added during preparation of the compound from which the resilient gasket is made.

As will be apparent to those skilled in the art in the light of the foregoing disclosure, many alterations and modifications are possible in the practice of this invention without departing from the scope thereof as defined by the claims, for example other resilient gasket materials other than cross-linked hydrated silicone polymers may be employed as long as they exhibit the requisite resiliency, hardness and tackiness as set out above. Accordingly, the scope of the invention is to be construed in accordance with the following claims.

## Claims

1. A releasable mounting device for mounting to a rough surface, said releasable mounting device comprising a suction cup (12) and, mountable thereto, a resilient gasket (14) having a durometer rating of less than or equal to 30, shore A, said resilient gasket for location between said suction cup and said rough surface and cooperating with said suction cup to induce reduced air pressure between said resilient gasket and said rough surface when said resilient gasket and said suction cup arc flattened against said rough surface and said suction cup released so as to remain releasably mounted to said rough surface by reason of said reduced air pressure between said resilient gasket and said rough surface, characterized in that said resilient gasket is of a material having a tackiness, said material adapted so as to leave a minimal oily residue on said rough surface when said resilient gasket is removed from said rough surface.

2. The device of claim 1 further characterized by said resilient gasket having a durometer rating of less than or equal to 20, shore A.

3. The device of claim 2 further characterized by said resilient gasket having a durometer rating of less than or equal to 10, shore A.

4. The device of claims 1, 2 or 3 wherein said resilient gasket is made of cross-linked hydrated silicone polymer.

5. The device of claims 1, 2 or 3 wherein said resilient gasket is adhered by chemical bonding to a concave contact surface of said suction cup.

6. The device of claims 1, 2 or 3 wherein said suction cup is a frame securable to said resilient gasket wherein said frame pulls a center zone of said resilient gasket away from said rough surface to thereby induce said reduced air pressure in a void thereby formed between the center zone and the rough surface, a peripheral zone of said resilient gasket forming an air-impervious bond to said rough surface.

## Patentansprüche

1. Eine lösbare Befestigungsvorrichtung für die Befestigung an rauhen Oberflächen, bestehend aus einem Saugnapf (12) und einer, daran anbringbaren, elastischen Haftmasse (14) mit einer Rückprallhärte von maximal 30 Shore A, wobei genannte elastische Haftmasse für eine Position zwischen Saugnapf und genannter, rauhen Oberfläche bestimmt, mit genanntem Saugnapf mitwirkend, einen negativen Luftdruck zwischen genannter, elastischer Haftmasse und genannter, rauhen Oberfläche herbeiführt, sobald genannte elastische Haftmasse und genannter Saugnapf gegen genannte, rauhe Oberfläche gedrückt werden und genannter Saugnapf, auf der genannten, rauhen Oberfläche belassen, auf Grund des genannten negativen Luftdruckes zwischen der genannten, elastischen Haftmasse und der genannten, rauhen Oberfläche, und zu der genannten, rauhen Oberfläche lösbar jedoch befestigt bleibt, **dadurch gekennzeichnet**, daß die genannte Haftmasse aus einem klebrigen Material besteht, und daß das genannte Material in solcher Art geeignet ist, lediglich einen minnimalen Ölrückstand auf der genannten, rauhen Oberfläche zu hinterlassen, wenn genanntes, elastische Haftmaterial von genannter, rauhen Oberfläche entfernt wird.

2. Die Vorrichtung des Patentanspruches 1 dadurch gekennzeichnet, daß die genannte elastische Haftmasse eine Rückprallhärte von maximal 20 Shore A aufweist.

3. Die Vorrichtung des Patentanspruches 2 dadurch gekennzeichnet, daß die genannte, elastische Haftmasse eine Rückprallhärte von maximal 10 Shore A aufweist.

4. Die Vorrichtung der Patentansprüche 1, 2 oder 3 dadurch gekennzeichnet, daß die genannte, elastische Haftmasse aus verntezten, hydratisiertem Silikon Polymer hergestellt ist.

5. Die Vorrichtung der Patentansprüche 1, 2 oder 3 dadurch gekennzeichnet, daß die genannte, elastische Haftmasse durch chemische Bindung der konkaven Kontaktfläche des genannten Saugnapfes anhaftet.

6. Die Vorrichtung der Patentansprüche 1, 2 oder 3 dadurch gekennzeichnet, daß der genannte Saugnapf einen, mit der genannten, elastischen Haftmasse verbindbaren Rahmen darstellt, wobei der genannte Rahmen eine zentrale Zone der genannten, elastischen Haftmasse von der genannten, rauhen Oberfläche abzieht und dadurch in einem Hohlraum zwischen der zentralen Zone und der rauhen Oberfläche den genannten, negativen Luftdruck herbeiführt, somit eine Peripheriezone der elastischen Haftmasse als luftundurchlässige Bindung zu der genannten rauhen Oberfläche erzeugend.

## Revendications

1. Languette de montage élastique pour montage sur des surfaces rugueuses, ladite languette de montage élastique comprend une ventouse (12) s'apprêtant, dès lors, à un joint résilient de dureté en caoutchouc (durometer), estimée à moins que ou égale à 30 à l'échelle Shore A, ledit joint résilient se glisse entre la ventouse et ladite surface rugueuse, s'alliant à la ventouse pour réduire la pression d'air entre ledit joint résilient lorsque ledit joint résilient et ladite ventouse sont aplatis contre la surface rugueuse permettant à ladite ventouse de rester montée détendue contre ladite surface rugueuse à cause de ladite réduction de pression d'air entre ledit joint résilient et ladite surface rugueuse, ledit joint résilient se caractérise d'un matériau doté de viscosité et ledit matériau s'adapte de sorte qu'il laisse un minimum de résidu huileux sur ladite surface rugueuse lorsque ledit joint résilient est retiré de ladite surface rugueuse.

2. La languette de montage élastique de la revendication 1 se caractérise davantage par ledit joint résilient doté d'une dureté de caoutchouc (durometer) estimée à moins que ou égale à 20 à l'échelle Shore A.

3. La languette de montage élastique de la revendication 2 se caractérise davantage par ledit joint résilient doté d'une dureté de caoutchouc (durometer) estimée à moins que ou égale à 10 à l'échelle Shore A.

4. La languette de montage élastique des revendications 1, 2 ou 3 se caractérise davantage par ledit joint résilient fabriqué de polymère entrecroisé de silicone hydraté.

5. La languette de montage élastique des revendications 1, 2 ou 3 se caractérise davantage par ledit joint résilient qui s'affixe à une surface concave par le processus du collage chimique de ladite ventouse.

6. La languette de montage élastique des revendications 1, 2 ou 3 dans laquelle ladite ventouse est un dispositif de caoutchouc s'attachant en sureté audit joint résilient duquel ledit dispositif en caoutchouc aspire la zone centrale à l'écart de ladite surface rugueuse et, de ce fait, provoquant ladite réduction de pression d'air en créant un vide entre la zone centrale du joint résilient et la surface rugueuse, dont la zone périphérique dudit joint résilient produit une liaison imperméable à l'air de ladite surface rugueuse.
